(19) Europäisches Patentamt
European Patent Office
Office européen des brevets

(11) **EP 4 772 261 A1**

(12) **EUROPEAN PATENT APPLICATION**
published in accordance with Art. 153(4) EPC

(43) Date of publication:
**08.07.2026  Bulletin 2026/28**

(21) Application number: **24859676.9**

(22) Date of filing: **26.08.2024**

(51) International Patent Classification (IPC):
**B01D 39/16** (2006.01)       **B01D 46/52** (2006.01)
**B05D 3/02** (2006.01)        **B05D 7/00** (2006.01)
**B05D 7/24** (2006.01)

(52) Cooperative Patent Classification (CPC):
**B01D 39/16; B01D 46/52; B05D 3/02; B05D 7/00;
B05D 7/24**

(86) International application number:
**PCT/JP2024/030138**

(87) International publication number:
**WO 2025/047643 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.09.2023  JP 2023142439**

(71) Applicant: **Daikin Industries, Ltd.
Osaka-shi, Osaka 530-0001 (JP)**

(72) Inventors:
• **KIRITANI, Emi
  Osaka-shi, Osaka 530-001 (JP)**
• **CHAEN, Shinichi
  Osaka-shi, Osaka 530-001 (JP)**

(74) Representative: **Hoffmann Eitle
Patent- und Rechtsanwälte PartmbB
Arabellastraße 30
81925 München (DE)**

(54) **METHOD FOR MANUFACTURING AIR FILTER FILTERING MEDIUM, AIR FILTER FILTERING MEDIUM, FILTER PACK, AND AIR FILTER UNIT**

(57)    Provided are a method for producing an air filter medium in which the deterioration of the functions during bonding can be suppressed, an air filter medium, a filter pack, and an air filter unit.

The method for producing an air filter medium includes a first step of preparing a porous membrane and an air-permeable membrane and a second step of bonding the porous membrane and the air-permeable membrane using a hot-melt adhesive in a molten state. In the second step, a temperature of the air-permeable membrane is lower than a temperature of the hot-melt adhesive in the molten state.

FIG. 6

**Description**

Technical Field

The present disclosure relates to a method for producing an air filter medium, an air filter medium, a filter pack, and an air filter unit.

Background Art

In the related art, for example, a porous membrane (hereinafter, sometimes referred to as a "PTFE porous membrane") made of polytetrafluoroethylene (hereinafter, sometimes referred to as "PTFE") has been used as an air filter. Since the PTFE porous membrane has higher dust collection efficiency than glass fiber filter media at the same pressure loss, it is suitably used particularly for HEPA filters (High Efficiency Particulate Air Filters) and ULPA filters (Ultra Low Penetration Air Filters).

As such a filter, for example, PTL 1 (Japanese Unexamined Patent Application Publication No. 2009-297702) discloses an air filter medium in which a PTFE porous membrane and an air-permeable support member are stacked.

Summary of Invention

Technical Problem

The air filter medium described in PTL 1 is produced by thermally laminating the entire PTFE porous membrane and air-permeable support member with a pair of heated rolls.

However, in such a thermal lamination process using heated rolls, the function of any of the layers constituting the filter medium may deteriorate due to heat. Therefore, it is desirable to suppress the deterioration of the function during bonding.

Solution to Problem

A method for producing an air filter medium according to a first aspect includes a first step of preparing a porous membrane and an air-permeable membrane and a second step of bonding the porous membrane and the air-permeable membrane using a hot-melt adhesive in a molten state. In the second step, a temperature of the air-permeable membrane is lower than a temperature of the hot-melt adhesive in the molten state.

The air-permeable membrane is not limited and may be, for example, a nonwoven fabric.

According to this method for producing an air filter medium, the porous membrane and the air-permeable membrane can be bonded while the temperature of the air-permeable membrane is lower than that of the hot-melt adhesive in a molten state. Therefore, the deterioration of the function of the air-permeable membrane is suppressed.

A method for producing an air filter medium according to a second aspect is the method for producing an air filter medium according to the first aspect, wherein either the porous membrane or the air-permeable membrane is either a melt-blown nonwoven fabric, a spun-bonded nonwoven fabric, or a membrane containing one or two or more selected from the group consisting of an antibody, an antibacterial agent, and an antifungal agent.

When either the porous membrane or the air-permeable membrane includes a melt-blown nonwoven fabric or a spun-bonded nonwoven fabric, wrinkles tend to be generated due to heat in bonding the porous membrane and the air-permeable membrane, which may make it difficult to achieve uniform bonding. In contrast, according to this method for producing an air filter medium, heating of the melt-blown nonwoven fabric or the spun-bonded nonwoven fabric is suppressed. Therefore, uniform bonding between the porous membrane and the air-permeable membrane can be achieved.

When either the porous membrane or the air-permeable membrane includes an antibody such as a protein, the antibody such as a protein denatures due to heat and the function of the antibody may be reduced or lost. However, according to this method for producing an air filter medium, the denaturation of the antibody due to heat is suppressed, and the reduction in the function of the antibody is suppressed.

When either the porous membrane or the air-permeable membrane includes an antibacterial agent or an antifungal agent, the antibacterial agent or the antifungal agent denatures due to heat and the function of the antibacterial agent or the antifungal agent may be reduced or lost. However, according to this method for producing an air filter medium, the denaturation of the antibacterial agent or the antifungal agent due to heat is suppressed, and the reduction in the function of the antibacterial agent or the antifungal agent is suppressed.

A method for producing an air filter medium according to a third aspect is the method for producing an air filter medium according to the first aspect or the second aspect, wherein the porous membrane is a polytetrafluoroethylene porous membrane.

According to this method for producing an air filter medium, a high-performance air filter medium can be produced.

A method for producing an air filter medium according to a fourth aspect is the method for producing an air filter medium according to any one of the first aspect to the third aspect, wherein the air-permeable membrane contains one or two or more selected from the group consisting of polyethylene terephthalate (PET), polyethylene (PE), polyphenylene sulfide (PPS), polypropylene (PP), and polyamide (PA).

In the air filter medium including the air-permeable membrane, the amount of total organic carbon (TOC) per unit area of the air filter medium, the total organic carbon separating from the air filter medium when an inert gas is passed for 60 minutes through the air filter medium heated to 40°C, is 1000 $\mu$g/m$^2$ or less.

A method for producing an air filter medium according to a fifth aspect is the method for producing an air filter medium according to any one of the first aspect to the fourth aspect, wherein the porous membrane and the air-permeable membrane are bonded using the hot-melt adhesive, the hot-melt adhesive being in a fibrous form.

According to this method for producing an air filter medium, since the hot-melt adhesive is in a fibrous form, the air filter medium to be obtained can have a small pressure loss.

A method for producing an air filter medium according to a sixth aspect is the method for producing an air filter medium according to the fifth aspect, wherein, in the second step, the hot-melt adhesive in the molten state is discharged from a nozzle, and is fiberized by being stretched using an air flow having a speed higher than a discharge speed of the hot-melt adhesive from the nozzle.

According to this method for producing an air filter medium, the hot-melt adhesive is easily fiberized.

A method for producing an air filter medium according to a seventh aspect is the method for producing an air filter medium according to the fifth aspect or the sixth aspect, wherein a plurality of fibers of the hot-melt adhesive are arranged so as to share a common longitudinal direction.

It is preferable that the plurality of fibers of the adhesive do not overlap with each other, or that the number of fiber intersecting points per one fiber be three or less.

According to this method for producing an air filter medium, overlapping of the plurality of fibers of the hot-melt adhesive is suppressed. Thus, the porous membrane and the air-permeable membrane can be uniformly bonded, which suppresses the occurrence of partial peeling.

When the air filter medium is pleated, peeling of the air-permeable membrane from the porous membrane during pleating is suppressed.

A method for producing an air filter medium according to an eighth aspect is the method for producing an air filter medium according to any one of the first aspect to the seventh aspect, wherein the hot-melt adhesive has a melt viscosity at 180°C of 1000 mPa·s or more and 2500 mPa·s or less.

According to this method for producing an air filter medium, the application can be easily performed in a molten state.

A method for producing an air filter medium according to a ninth aspect is the method for producing an air filter medium according to any one of the first aspect to the eighth aspect, wherein the hot-melt adhesive is one or two or more selected from the group consisting of a polyolefin resin and a polyamide resin.

The hot-melt adhesive containing one or two or more selected from the group consisting of a polyolefin resin and a polyamide resin is preferably used together with the fluororesin porous membrane from the viewpoint of improving the adhesion.

According to this method for producing an air filter medium, the porous membrane and the air-permeable membrane can be satisfactorily bonded.

A method for producing an air filter medium according to a tenth aspect is the method for producing an air filter medium according to any one of the first aspect to the ninth aspect, wherein an average fiber diameter of the porous membrane, an average fiber diameter of the adhesive, and an average fiber diameter of the air-permeable membrane are represented by "average fiber diameter of porous membrane":"average fiber diameter of adhesive":"average fiber diameter of air-permeable membrane" = 1/2000 to 1/30:1 to 6:1.

The average fiber diameter of the porous membrane may be, for example, 30 nm or more and 150 nm or less. The average fiber diameter of the adhesive may be, for example, 20 $\mu$m or more and 60 $\mu$m or less. The average fiber diameter of the air-permeable membrane may be 5 $\mu$m or more and 30 $\mu$m or less.

According to this method for producing an air filter medium, it is possible to suppress the generation of portions where adhesion is not achieved because fibers of the adhesive cannot be interposed between the porous membrane and the air-permeable membrane as a result of entry of the fibers of the adhesive into gaps between fibers of the air-permeable membrane. It is also possible to keep low the air resistance caused by the fibers of the adhesive in the air filter medium to be obtained.

A method for producing an air filter medium according to an eleventh aspect is the method for producing an air filter medium according to any one of the first aspect to the tenth aspect, wherein after the second step, a sheet including the porous membrane, the hot-melt adhesive, and the air-permeable membrane is passed between a pair of rolls. A pressure of 0.3 Pa or more and 0.6 Pa or less is applied to the sheet when the sheet passes between the pair of rolls.

According to this method for producing an air filter medium, the adhesion between the porous membrane and the air-permeable membrane is improved.

An air filter medium according to a twelfth aspect is an air filter medium produced by the method according to any one of the first aspect to the eleventh aspect.

In this air filter medium, the deterioration of the function is suppressed.

A filter pack according to a thirteenth aspect is the air filter medium according to the twelfth aspect, wherein the air filter medium is folded so as to have mountain-folded portions and valley-folded portions.

An air filter unit according to a fourteenth aspect includes an air filter medium produced by the method according to any one of the first aspect to the eleventh aspect, or a pleated filter medium that is an air filter medium produced by the method according to any one of the first aspect to the eleventh aspect and is folded so as to have mountain-folded portions and valley-folded portions; and a frame body. The frame body holds the air filter medium or the pleated filter medium.

An air filter medium according to a fifteenth aspect includes a porous membrane, an air-permeable membrane, and a hot-melt adhesive. The hot-melt adhesive bonds the porous membrane and the air-permeable membrane. A degree of deformation of fibers due to heat in a portion of the air-permeable membrane on a side opposite to the porous membrane is lower than a degree of deformation of fibers due to heat in a portion of the air-permeable membrane on a side of the porous membrane.

In this air filter medium, the deterioration of the function of fibers due to heat in the portion of the air-permeable membrane on a side opposite to the porous membrane is suppressed.

Brief Description of Drawings

[Fig. 1] Fig. 1 is a schematic cross-sectional view of the layer structure of an air filter medium (part one).
[Fig. 2] Fig. 2 is a schematic cross-sectional view of the layer structure of an air filter medium (part two).
[Fig. 3] Fig. 3 is a schematic cross-sectional view of the layer structure of an air filter medium (part three).
[Fig. 4] Fig. 4 is a schematic exterior perspective view of a filter pack.
[Fig. 5] Fig. 5 is a schematic exterior perspective view of an air filter unit.
[Fig. 6] Fig. 6 is a schematic configuration diagram of an adhesive application step.
[Fig. 7] Fig. 7 is a diagram illustrating one example of an applied pattern of fibers of an adhesive.
[Fig. 8] Fig. 8 is a diagram illustrating another example of an applied pattern of fibers of an adhesive.

Description of Embodiments

Hereinafter, an air filter medium, a filter pack, an air filter unit, and methods for producing them will be described based on examples.

(1) Air filter medium

The air filter medium includes a porous membrane, an air-permeable membrane, and a fibrous adhesive that bonds the porous membrane and the air-permeable membrane.

The average fiber diameter of the porous membrane, the average fiber diameter of the adhesive, and the average fiber diameter of the air-permeable membrane preferably satisfy the relationship of "average fiber diameter of porous membrane":"average fiber diameter of adhesive":"average fiber diameter of air-permeable membrane" = 1/2000 to 1/30:1 to 6:1.

By using an adhesive whose average fiber diameter is 1 time or more the average fiber diameter of the air-permeable membrane, entry of fibers of the adhesive into gaps between fibers of the air-permeable membrane is suppressed. The average fiber diameter of the adhesive is more preferably 2.0 times or more the average fiber diameter of the air-permeable membrane. By using an adhesive whose average fiber diameter is 6 times or less the average fiber diameter of the air-permeable membrane, the rate of increase in pressure loss due to the fibers themselves of the adhesive can be suppressed. In the adhesive, the weight percentage of the number of fibers of the adhesive whose fiber diameter is larger than the average fiber diameter of the air-permeable membrane with respect to the total number of fibers of the adhesive is preferably 90 wt% or more.

By using an adhesive whose average fiber diameter is 30 times or more the average fiber diameter of the porous membrane, the influence of the fibers of the adhesive on the filter medium performance of the porous membrane can be suppressed. By using an adhesive whose average fiber diameter is, for example, 2000 times or less the average fiber diameter of the porous membrane, the rate of increase in pressure loss due to the fibers themselves of the adhesive can be readily suppressed.

By using an air-permeable membrane whose average fiber diameter is 30 times or more the average fiber diameter of the adhesive, the porous membrane can be readily supported by the air-permeable membrane even if it is difficult to independently use the porous membrane because of its small thickness, which can increase the rigidity of the air filter medium.

The average fiber diameter of the porous membrane may be calculated, for example, as a number-average fiber diameter by randomly selecting 50 fibers from an image of a scanning electron micrograph. The average fiber diameter of the adhesive and the average fiber diameter of the air-permeable membrane can be evaluated for fibers present within a predetermined region of an image observed using a microscope or the like and may be, for example, number-average fiber diameters for 200 fibers.

From the viewpoint of suppressing entry of fibers of the adhesive into gaps between fibers of the air-permeable membrane, the average fiber diameter of the adhesive is preferably 20 $\mu$m or more and more preferably 30 $\mu$m or more. When the adhesive is used for bonding a porous membrane whose average fiber diameter is 30 nm or more and 150 nm or less, the average fiber diameter of the adhesive is preferably 60 $\mu$m or less and may be 55 $\mu$m or less from the viewpoint of suppressing the rate of increase in pressure loss due to the presence of the fibers of the adhesive.

The average length of the fibers of the adhesive is not limited and may be, for example, 100 times or more the average fiber diameter of the adhesive, and is preferably 500 times or more the average fiber diameter of the adhesive.

When a virtual line of 1 cm in length is drawn in a direction perpendicular to the longitudinal direction of any one of a plurality of fibers of the adhesive, the average number of fibers of the adhesive intersecting the virtual line is preferably 2 or more and 3 or less. The average number may be, for example, an average counted for 200 freely selected fibers of the adhesive. By arranging a plurality of fibers of the adhesive side by side, overlapping between the fibers of the adhesive can be suppressed, and bonding sites between the porous membrane and the air-permeable membrane can be arranged uniformly. Since the average number of fibers of the adhesive intersecting the virtual line of 1 cm in length is 2 or more, the concentration of stress on a specific bonded portion when a force acts on the porous membrane or the air-permeable membrane is suppressed, and a good bonded state is easily maintained. For example, when a bonded article of the porous membrane and the air-permeable membrane is pleated, peeling of the porous membrane and the air-permeable membrane during pleating can be suppressed. Since the average number of fibers of the adhesive intersecting the virtual line of 1 cm in length is 3 or less, an increase in the pressure loss of the air filter medium is suppressed.

In cases where the number of fibers of the adhesive is approximately the same, such as a case where the average number of fibers of the adhesive intersecting the virtual line of 1 cm in length is approximately the same, there is a tendency that a larger average fiber diameter of the fibers of the adhesive leads to an increase in the applied amount per unit area $(g/m^2)$. However, as described later, it has become clear that the rate of increase in pressure loss due to the fibers of the adhesive covering the porous membrane tends to be remarkably larger than the rate of increase in the applied amount per unit area of the adhesive. Therefore, from the viewpoint of sufficiently suppressing the rate of increase in pressure loss, the average fiber diameter of the adhesive is more preferably 1000 times or less the average fiber diameter of the porous membrane.

When viewed in the thickness direction of the air filter medium, it is preferable that the plurality of fibers of the adhesive do not overlap with each other, or that the number of fiber intersecting points per one fiber be 3 or less. The number of fiber intersecting points of the adhesive means an average number of fiber intersecting points per one fiber of the adhesive between the one fiber and other fibers of the adhesive. Although not limited, the number of fiber intersecting points may be determined as an average number of fiber intersecting points for 100 fibers of the adhesive within a freely selected region. The number of fiber intersecting points of the adhesive per one fiber of the adhesive is more preferably 2 or less. In points where fibers of the adhesive overlap with each other when viewed in the thickness direction of the air filter medium, bonding between the porous membrane and the air-permeable membrane can be achieved. However, since gaps between the porous membrane and the air-permeable membrane widen at the points where fibers of the adhesive overlap with each other, sufficient bonding between the porous membrane and the air-permeable membrane becomes difficult around the points where fibers of the adhesive overlap with each other. Therefore, the porous membrane floats from the air-permeable membrane at some points, and it becomes difficult to ensure a uniform bonded state over the entire membrane. Accordingly, the number of points where fibers of the adhesive overlap with each other is preferably few. Even if points where fibers of the adhesive overlap with each other are formed, it is possible to obtain a good bonded state by sufficiently arranging fibers of the adhesive around the overlapping points. In that case, however, the amount of the adhesive required for bonding the porous membrane and the air-permeable membrane increases, resulting in an increase in the pressure loss of the air filter medium.

When viewed in the thickness direction of the air filter medium, it is preferable that the longitudinal directions of the plurality of fibers of the adhesive each be a predetermined direction and be parallel to one another. As a result, overlapping between the fibers of the adhesive can be made less likely to occur.

When viewed in the thickness direction of the air filter medium, the shape of the fibers of the adhesive is preferably a wavy shape having peak portions and valley portions. At least half of the shape of the fibers of the adhesive is preferably a wavy shape having peak portions and valley portions, and 90% or more of the shape is preferably a wavy shape having peak portions and valley portions.

When viewed in the thickness direction of the air filter medium, the adhesive preferably has a shape other than shapes in which overlapping between fiber portions in one fiber of the adhesive occurs. For example, the shape of the adhesive is preferably not helical or is preferably not a random application pattern.

From the viewpoint of improving the adhesion between the porous membrane and the air-permeable membrane, the amount of the adhesive is preferably 1 $g/m^2$ or more and more preferably 2 $g/m^2$ or more between one porous membrane and one air-permeable membrane when viewed in the thickness direction of the air filter medium. From the viewpoint of suppressing an increase in pressure loss due to the presence of the fibers of the adhesive, the amount of the adhesive is preferably 5 $g/m^2$ or less and more preferably 4 $g/m^2$ or less between one porous membrane and one air-permeable membrane when viewed in the thickness direction of the air filter medium.

From the viewpoint of keeping low the amount of total organic carbon (TOC) of the air filter medium, it is preferable that the adhesive mainly contain at least one of a polyolefin resin and a polyamide resin, and it is preferable that the adhesive be mainly composed of a polyolefin resin. The adhesive is preferably not a rubber-based adhesive nor an acrylic-based adhesive. The weight percentage of the polyolefin resin in the adhesive is, for example, 70% or more and preferably 90% or more. From the viewpoint of suppressing an increase in pressure loss due to an excessively large fiber diameter of the adhesive, the melt viscosity of the adhesive at 180°C is preferably 2500 mPa·s or less and more preferably 2200 mPa·s or less. From the viewpoint of readily obtaining fibers that extend continuously while suppressing a state where discharged fibers are cut off and of readily controlling the position to be applied, the melt viscosity of the adhesive at 180°C is preferably 1000 mPa·s or more and more preferably 1500 mPa·s or more. From the viewpoint of suppressing the deterioration of the adhesive, the heating temperature at which the adhesive is melted is preferably 250°C or less and more preferably 200°C or less.

In a case where the adhesive is applied so that the peel strength between the porous membrane and the air-permeable membrane in the air filter medium is ensured to be 0.1 N/35 mm or more, the rate of increase in pressure loss obtained from the pressure loss of a stacked article obtained by stacking the porous membrane and the air-permeable membrane without using the adhesive and the pressure loss of the air filter medium obtained by bonding the porous membrane and the air-permeable membrane using the adhesive is preferably 10% or less, more preferably 7% or less, and further preferably 6% or less. The rate of increase in pressure loss is calculated by the following formula.

Rate of increase in pressure loss (%) = (pressure loss of air filter medium/pressure loss of stacked article) $\times$ 100 - 100

The porous membrane preferably has an average fiber diameter of, for example, 30 nm or more and 150 nm or less. Thus, the collection efficiency in the air filter medium can be increased.

The porous membrane is not limited and may be, for example, a melt-blown nonwoven fabric, a spun-bonded nonwoven fabric, or a membrane containing an antibody. The porous membrane is preferably a fluororesin porous membrane that is mainly composed of a fluororesin and has a porous membrane structure having fibrils (fibers) and nodes (nodal portions) connected to the fibrils. Here, the term "mainly" means that, when a plurality of kinds of components are contained, the fluororesin is contained in the largest amount. The fluororesin porous membrane may contain, for example, 50 wt% or more of a fluororesin relative to the weight of the fluororesin porous membrane, preferably 80 wt% or more, more preferably 95 wt% or more, and may be composed only of a fluororesin. This can provide an air filter medium having sufficient performance. Even in applications where high performance as an air filter medium is required, as in the case where the porous membrane is a fluororesin porous membrane, the amount of TOC generated can be suppressed.

Examples of components different from the fluororesin contained in the fluororesin porous membrane include inorganic fillers that are non-fibrillatable non-melt-fabricable components.

The fluororesin used for the fluororesin porous membrane may be composed of one component or two or more components. The fluororesin is also, for example, a fluororesin containing a fibrillatable PTFE. The fluororesin is also, for example, a three-component mixture of the fibrillatable PTFE, the non-fibrillatable non-melt-fabricable component, and a non-fibrillatable melt-fabricable component having a melting point of less than 320°C. The melting point can generally be measured using a DSC (differential scanning calorimeter) and is one that appears as an endothermic peak. For a noncrystalline structure in which the melting point does not clearly appear, the softening point can be used instead. The softening point is identified using differential thermal analysis (DTA) as a temperature at which the slope of the DTA graph first changes.

The fibrillatable PTFE is a high-molecular-weight PTFE obtained through emulsion polymerization or suspension polymerization of tetrafluoroethylene (TFE). The high molecular weight herein is a molecular weight at which fibrillation is easily caused and fibrils having a large fiber length are obtained during drawing in the production of a porous membrane, the standard specific gravity (SSG) is 2.130 to 2.230, and the melt flow substantially does not occur because of the high melt viscosity. Whether fibrillation is achieved or not can be judged by checking whether paste extrusion, which is a typical method for molding a high-molecular-weight PTFE powder obtained from a polymer of TFE, can be performed or not. In the case where an unfired molded body obtained through paste extrusion substantially does not have strength or elongation, such as the case where the molded body has an elongation of 0% and is broken when stretched, such a molded body can be considered to have no fibrillability. The high-molecular-weight PTFE may be a modified polytetrafluoroethylene, a homo-polytetrafluoroethylene, or a mixture of a modified PTFE and a homo-PTFE.

Examples of the non-fibrillatable non-melt-fabricable component include components having thermoplasticity, such as low-molecular-weight PTFEs, thermosetting resins, inorganic fillers, and mixtures of the foregoing. The low-molecular-weight PTFE is a PTFE having a number-average molecular weight of 600,000 or less, a melting point of 320°C or more and 335°C or less, and a melt viscosity at 380°C of 100 Pa·s to $7.0 \times 10^5$ Pa·s.

The non-fibrillatable melt-fabricable component having a melting point of less than 320°C preferably exhibits a melt viscosity at 380°C of less than 10,000 Pa·s. The melting point of the non-fibrillatable melt-fabricable component is a temperature at a peak top of a heat-of-fusion curve obtained when the component is heated to a temperature higher than or equal to the melting point at a temperature-increasing rate of 10 °C/min to be completely melted once, cooled to a temperature lower than or equal to the melting point at 10 °C/min, and then heated again at 10 °C/min using a differential scanning calorimeter (DSC).

The fibrillatable PTFE, the non-fibrillatable non-melt-fabricable component, and the non-fibrillatable melt-fabricable component having a melting point of less than 320°C can be those described in detail, for example, in International Publication No. 2020/067182.

In the method for producing a fluororesin porous membrane, for example, a fine powder obtained by coagulation or co-coagulation from emulsion polymerization of TFE is subjected to dehydration and drying, then mixed with a liquid lubricant (extrusion aid), and paste-extruded to obtain a sheet-shaped extruded product. Then, a fluororesin porous membrane can be obtained by removing the liquid lubricant from an unfired film obtained by rolling the sheet-shaped extruded product with calender rolls or the like and performing drawing.

The thus-obtained fluororesin porous membrane preferably has a pressure loss of 300 Pa or less when air is passed therethrough at a flow rate of 5.3 cm/s. The pressure loss of the fluororesin porous membrane is not limited and may be 50 Pa or more.

The fluororesin porous membrane may have a particle collection efficiency of 99.00% or more, preferably 99.99% or more, when air containing NaCl particles having a particle diameter of 0.1 μm is passed therethrough at a flow rate of 5.3 cm/s.

The PF value of the fluororesin porous membrane is preferably 20 or more. The PF value is a value defined by the following formula PF value = {-log((100 - collection efficiency (%))/100)}/(pressure loss (Pa)/1000) using the pressure loss and the collection efficiency determined using NaCl particles having a particle diameter of 0.1 μm.

The thickness of the fluororesin porous membrane may be, for example, 1.0 μm or more and is preferably 3.0 μm or more. By increasing the thickness of the fluororesin porous membrane, the dust-holding capacity can be increased. The thickness of the fluororesin porous membrane is, for example, 300 μm or less and is preferably 200 μm or less. The thickness of a single fluororesin porous membrane can be determined by stacking five membranes to be measured, measuring the total thickness of the five membranes using a thickness meter (1D-110MH, manufactured by Mitutoyo Corporation), and dividing the total thickness by 5.

When the porous membrane is a fluororesin porous membrane, the adhesive preferably contains at least one of a polyolefin resin and a polyamide resin from the viewpoint that adhesion with the fluororesin porous membrane is good and that the amount of total organic carbon (TOC) of the air filter medium can be kept low.

The air-permeable membrane is preferably, for example, a melt-blown nonwoven fabric, a spun-bonded nonwoven fabric, or a membrane containing one or two or more selected from the group consisting of an antibody, an antibacterial agent, and an antifungal agent.

Here, the melt-blown nonwoven fabric or the spun-bonded nonwoven fabric can support the porous membrane, or can function as a pre-collection layer by being disposed on the upstream side of the porous membrane. The membrane containing an antibody may be, for example, a membrane on which an antibody is carried. The antibody is preferably an antibody that captures at least one harmful substance selected from bacteria, molds, viruses, and allergens. Examples of the bacteria include Gram-positive bacteria such as Staphylococcus (Staphylococcus aureus and Staphylococcus epidermidis), Micrococcus, Bacillus anthracis, Bacillus cereus, Bacillus subtilis, and Cutibacterium acnes; and Gram-negative bacteria such as Pseudomonas aeruginosa, Serratia bacteria, Burkholderia cepacia, Streptococcus pneumoniae, Legionella bacteria, and Mycobacterium tuberculosis. Examples of the molds include Aspergillus, Penicillium, Cladosporium, Fusarium, and Alternaria. Examples of the viruses include influenza virus, coronavirus (SARS virus), adenovirus, and rhinovirus. Examples of the allergens include pollen, mite allergens, and cat allergens. The membrane containing an antibacterial agent may be, for example, a membrane on which an antibacterial agent is carried. Examples of the antibacterial agent include organic antibacterial agents, for example, surfactant-type antibacterial agents, alcohol-type antibacterial agents, imidazole-type antibacterial agents, and antibacterial agents using hinokitiol, which is a substance derived from natural products. The membrane containing an antifungal agent may be, for example, a membrane on which an antifungal agent is carried. Examples of the antifungal agent include organic antifungal agents, for example, surfactant-type antifungal agents, alcohol-type antifungal agents, imidazole-type antifungal agents, and antifungal agents using hinokitiol, which is a substance derived from natural products.

In bonding the porous membrane and the air-permeable membrane together, the melt-blown nonwoven fabric or the spun-bonded nonwoven fabric may shrink due to heat, whereby wrinkles are easily generated and uniform bonding may become difficult. In particular, when the porous membrane and the air-permeable membrane are bonded together by performing heating to a temperature exceeding the softening point of a resin constituting at least a part of the air-permeable membrane, heat-induced shrinkage and wrinkle generation become remarkable. In contrast, according to this method for producing an air filter medium, heating of the melt-blown nonwoven fabric or the spun-bonded nonwoven fabric is suppressed, which enables uniform bonding between the porous membrane and the air-permeable membrane. For example, even when an air-permeable membrane that shrinks in area to 95% or less due to heating at a temperature equal to or higher than the softening point is used, uniform bonding can be achieved according to this method for producing an air filter medium. In the case where wrinkles are generated due to heat in bonding the porous membrane and the air-permeable membrane together, when the bonded article of the porous membrane and the air-permeable membrane is further processed into a pleated shape, it may be difficult to realize a uniform pleated shape. In contrast, according to this method for producing an air filter medium, a decrease in uniformity in pleating is suppressed.

When the melt-blown nonwoven fabric or the spun-bonded nonwoven fabric is subjected to thermal lamination, the density changes due to heat-induced shrinkage, which may increase the pressure loss. In contrast, according to a method of production that does not positively heat the melt-blown nonwoven fabric or the spun-bonded nonwoven fabric itself, the increase in pressure loss is suppressed.

For the membrane containing an antibody such as a protein, such an antibody such as a protein generally denatures at temperatures exceeding 80°C and the function of the antibody may be reduced or lost. However, according to a method of production that does not positively heat the membrane itself containing an antibody such as a protein, the reduction in the function of the antibody is suppressed.

For the membrane containing an antibacterial agent or an antifungal agent, particularly when the membrane contains an organic antibacterial agent or an organic antifungal agent, denaturation occurs in a high-temperature environment such as 80°C and the function of the antibacterial agent or the antifungal agent is reduced or lost. However, according to a method of production that does not positively heat the membrane itself, the reduction in the function of the antibacterial agent or the antifungal agent is suppressed. The antibacterial agent and the antifungal agent may be known agents whose function is reduced or lost by performing heating to 100°C or higher, and may also be known agents whose function is reduced or lost by performing heating to 120°C or higher.

When the air-permeable membrane is used, for example, as a support layer that supports the porous membrane, the average fiber diameter is preferably 5 $\mu$m or more and 30 $\mu$m or less and more preferably 10 $\mu$m or more and 25 $\mu$m or less. Thus, an increase in pressure loss due to an excessively large fiber diameter of the air-permeable membrane is suppressed while the porous membrane is sufficiently supported.

When the air-permeable membrane is used, for example, as a pre-collection layer by being disposed on the upstream side of an air flow with respect to the porous membrane, the average fiber diameter is preferably 0.5 $\mu$m or more and 10.0 $\mu$m or less. Thus, the dust collection load on the porous membrane is distributed, and early clogging of the porous membrane can be suppressed.

The air-permeable membrane may contain one or two or more selected from the group consisting of polyethylene terephthalate (PET), polyethylene (PE), polyphenylene sulfide (PPS), polypropylene (PP), and polyamide (PA). Such an air-permeable membrane may be a melt-blown nonwoven fabric, a spun-bonded nonwoven fabric, or the like. In an air filter medium using this air-permeable membrane, the amount of total organic carbon (TOC) per unit area of the air filter medium, the total organic carbon separating from the air filter medium when an inert gas is passed for 60 minutes through the air filter medium heated to 40°C, is preferably 1000 $\mu$g/m$^2$ or less and more preferably 500 $\mu$g/m$^2$ or less. Even when the air-permeable membrane contains a component that may generate an organic gas in a high-temperature environment, bonding of the porous membrane and the air-permeable membrane is performed using an adhesive and the air-permeable membrane is not necessarily heated to a molten state. Therefore, an increase in the amount of total organic carbon due to heating of the air-permeable membrane is suppressed.

The air-permeable membrane is preferably composed of fibers that do not have a core/sheath structure including a core portion and a sheath portion having a lower melting point than the core portion, and is preferably composed of fibers having a homogeneous cross-sectional structure.

The air-permeable membrane is preferably flame-retardant. Specifically, the air-permeable membrane preferably exhibits flame retardancy equivalent to HF-1 in the UL 94-HF test method. Since the air filter medium is obtained by bonding the porous membrane and the air-permeable membrane using an adhesive without melting the air-permeable membrane, a membrane exhibiting flame retardancy is easily selected as the air-permeable membrane of the air filter medium.

The air-permeable membrane preferably has a pressure loss of, for example, 10 Pa or less when air is passed therethrough at a flow rate of 5.3 cm/s.

The air-permeable membrane may have a particle collection efficiency of 10% or less, preferably 5% or less, when air containing NaCl particles having a particle diameter of 0.1 $\mu$m is passed therethrough at a flow rate of 5.3 cm/s.

Such preferable physical properties of the air-permeable membrane are the same for each membrane even when a plurality of air-permeable membranes are used.

As described above, since the porous membrane and the air-permeable membrane are bonded using an adhesive, there is no need to perform bonding by partially melting either layer, and the selection of the material of the porous membrane or the material of the air-permeable membrane is less prone to restrictions.

(2) Layer structure of air filter medium

The layer structure of the air filter medium is not limited.

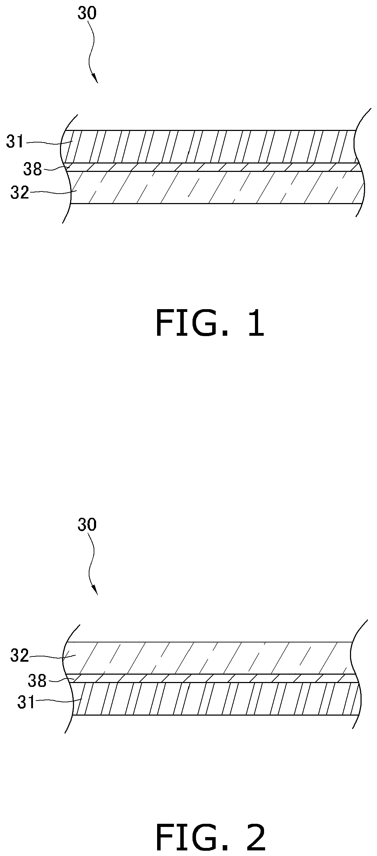

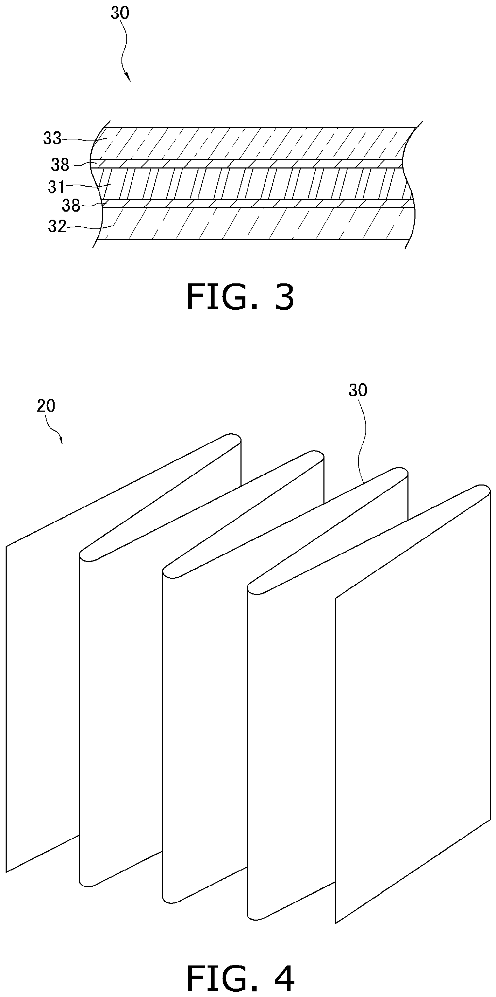

For example, as in an air filter medium 30 illustrated in Fig. 1, a porous membrane 31 and a first air-permeable membrane 32 may be stacked in the air flow direction so that an adhesive 38 is disposed between the porous membrane 31 and the first air-permeable membrane 32. The first air-permeable membrane 32 may be provided on the leeward side of the porous membrane 31 as illustrated in Fig. 1 or may be provided on the windward side of the porous membrane 31 as illustrated in Fig. 2. Alternatively, as illustrated in Fig. 3, the air filter medium may include the first air-permeable membrane 32 stacked in the air flow direction with respect to the porous membrane 31, and a second air-permeable membrane 33 stacked on the side opposite to the first air-permeable membrane 32 with respect to the porous membrane 31, such that the porous membrane 31 is supported from both the leeward side and the windward side. In this case, it is preferable that the adhesive 38 be disposed between the porous membrane 31 and the first air-permeable membrane 32, and that the adhesive 38 be disposed between the porous membrane 31 and the second air-permeable membrane 33.

The air filter medium may be produced by stacking an air-permeable membrane on the leeward side of the porous membrane and stacking, on the windward side of the porous membrane, a pre-collection layer as another example of the air-permeable membrane. In this case, by causing the upstream pre-collection layer to bear the dust collection load applied to the porous membrane, early clogging of the porous membrane can be suppressed.

(3) Physical properties of air filter medium

The pressure loss of the air filter medium may be, for example, 400 Pa or less, and is preferably 300 Pa or less. The pressure loss of the air filter medium is not limited and may be 50 Pa or more. The pressure loss of the air filter medium can be measured as a pressure loss obtained when air is passed therethrough at a flow rate of 5.3 cm/s.

The air filter medium may have a particle collection efficiency of 99.00% or more, preferably 99.99% or more, when air containing NaCl particles having a particle diameter of 0.1 $\mu$m is passed therethrough at a flow rate of 5.3 cm/s.

For the air filter medium, the PF value defined by the following formula PF value = {-log((100 - collection efficiency (%))/100)}/(pressure loss (Pa)/1000) using the pressure loss and the collection efficiency determined using NaCl particles having a particle diameter of 0.1 $\mu$m is preferably, for example, 20 or more.

The thickness of the air filter medium is preferably, for example, 350 $\mu$m or more. When the air filter medium is used in a state having folded portions, the thickness of the air filter medium is preferably, for example, 1000 $\mu$m or less and more preferably 750 $\mu$m or less from the viewpoint of suppressing an excessive increase in the thickness at the folded portions. The thickness of the air filter medium is a thickness measured when a load of 0.3 N is applied to a measurement target using a specific measuring device.

In the air filter medium, it is preferable that the average fiber diameter of the porous membrane be 30 nm or more and 150 nm or less, that the average fiber diameter of the adhesive be 20 $\mu$m or more and 60 $\mu$m or less, and that the average fiber diameter of the air-permeable membrane be 5 $\mu$m or more and 30 $\mu$m or less.

(4) Filter pack

Next, a filter pack (pleated filter medium) of the present embodiment will be described with reference to Fig. 4.

Fig. 4 is an exterior perspective view of a filter pack 20 of the present embodiment.

The filter pack 20 includes the air filter medium described above (for example, the air filter medium 30). The air filter medium of the filter pack 20 is a processed filter medium that has been processed (pleated) into a zigzag shape in which mountain folds and valley folds are alternately repeated. The pleating can be performed, for example, using a rotary folding machine. The folding width of the air filter medium is not limited and is, for example, 25 mm or more and 280 mm or less. By performing pleating, the folding area of the air filter medium can be increased in the case where the filter pack 20 is used for an air filter unit. Thus, an air filter unit having high collection efficiency can be obtained.

The filter pack 20 may further include, in addition to the air filter medium, a spacer (not illustrated) for maintaining a pleat pitch when used in an air filter unit. The material of the spacer is not limited, and a hot-melt resin can be preferably used. The air filter medium 30 may have a plurality of embossed protrusions, and the pleat pitch may be maintained by the embossed protrusions.

(5) Air filter unit

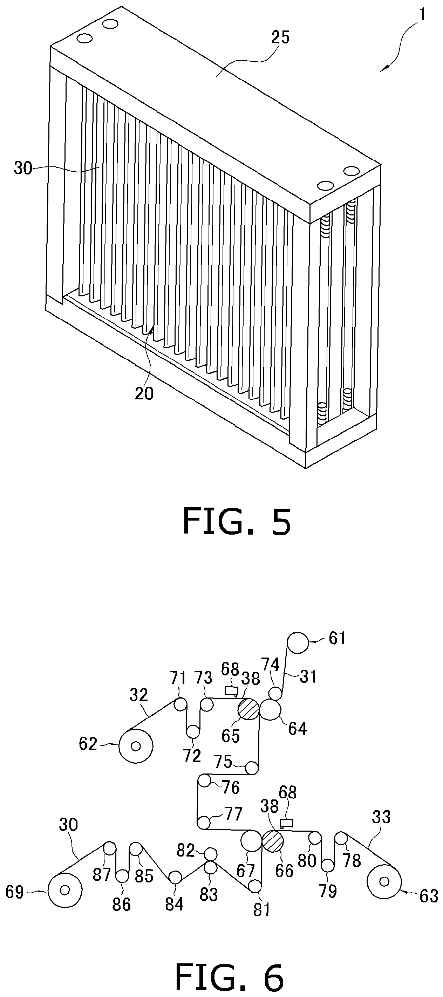

Next, an air filter unit 1 will be described with reference to Fig. 5.

Fig. 5 is an exterior perspective view of an air filter unit 1 of the present embodiment.

The air filter unit 1 includes the air filter medium or the filter pack described above and a frame body 25 that holds the air filter medium or the filter pack (pleated filter medium). The air filter unit 1 may be produced so that an air filter medium that has not been folded into mountain and valley folds is held by the frame body, or may be produced so that the filter pack 20 is held by the frame body 25. The air filter unit 1 illustrated in Fig. 5 is produced using the filter pack 20 and the frame body 25.

The frame body 25 is made, for example, by combining plate materials or by molding a resin, and the filter pack 20 and the frame body 25 are preferably sealed with each other using a sealant. The sealant is for preventing leakage between the filter pack 20 and the frame body 25 and is formed of, for example, a resin such as an epoxy resin, an acrylic resin, or a urethane resin.

The air filter unit 1 including the filter pack 20 and the frame body 25 may be a mini-pleat air filter unit in which one filter pack 20 extending in a flat plate shape is housed and held inside the frame body 25, or may be a V-bank air filter unit or a single-header air filter unit in which a plurality of filter packs extending in a flat plate shape are arranged side by side and held by the frame body.

(6) Examples of applications

The air filter medium, the filter pack, and the air filter unit according to the present embodiment are used for, for example, the following applications:

fields of, for example, ULPA filters (ultra low penetration air filters) (for producing semiconductors), HEPA filters (for hospitals and for producing semiconductors), cylindrical cartridge filters (for industrial use), bag filters (for industrial use), heat-resistant bag filters (for treating exhaust gas), heat-resistant pleated filters (for treating exhaust gas), SINBRAN (registered trademark) filters (for industrial use), catalyst filters (for treating exhaust gas), adsorbent-including filters (for installation in HDD), adsorbent-including vent filters (for installation in HDD), vent filters (e.g., for installation in HDD), filters for vacuum cleaners (for vacuum cleaners), general-purpose multilayered felt materials, cartridge filters for gas turbines (interchangeable components for gas turbines), and cooling filters (for casings of electronic devices);

fields of materials for freeze-drying such as freeze-drying bottles, automobile ventilation materials for electronic circuits and lamps, bottle applications such as bottle caps, protective ventilation for electronic devices, and ventilation/internal pressure regulation such as medical ventilation; and

masks of flat type, pleated type, three-dimensional type, and the like (for suppressing intrusion of dust, oil smoke, bacteria, viruses, and the like into the human body through the mouth and nose).

(7) Method for producing air filter medium

A method for producing the air filter medium includes a first step of preparing a porous membrane and an air-permeable membrane and a second step of bonding the porous membrane and the air-permeable membrane using a hot-melt adhesive in a molten state. In the second step, the temperature of the air-permeable membrane is lower than the temperature of the hot-melt adhesive in a molten state.

As described above, in the second step, the porous membrane and the air-permeable membrane can be bonded while the temperature of the air-permeable membrane is lower than the temperature of the hot-melt adhesive in a molten state. Therefore, the exposure of the air-permeable membrane to a high temperature is suppressed, the deformation of the air-permeable membrane is suppressed, and the deterioration of the function of the air-permeable membrane is suppressed.

There is also, for example, a bonding method in which the porous membrane and the air-permeable membrane are bonded by sandwiching the porous membrane and the air-permeable membrane from the outside in the thickness direction using heat rolls and melting the air-permeable membrane. However, in this bonding method, it is necessary to melt the surface of the air-permeable membrane on the porous membrane side. Therefore, when the air-permeable membrane heated with heat rolls pressed against the surface of the air-permeable membrane on the side opposite to the porous membrane side is heated until the surface of the air-permeable membrane on the porous membrane side is molten, the surface of the air-permeable membrane against which the heat rolls are pressed is further molten. As a result, the function possessed by the air-permeable membrane before the bonding step may be lost. Specifically, the fiber diameter of the air-permeable membrane changes remarkably, which may increase the pressure loss. In addition, the fiber diameter of the air-permeable membrane changes remarkably, which may decrease the support function for the porous membrane. For an air-permeable membrane containing an antibody and the like that lose the function at high temperatures, the function of the antibody and the like may deteriorate or be lost.

In contrast, in the above-described method for producing an air filter medium, the temperature of the air-permeable membrane is maintained lower than the temperature of the hot-melt adhesive in a molten state in the second step, which can suppress, for example, the deterioration of the function of the air-permeable membrane.

When a molten hot-melt adhesive having a temperature higher than that of the air-permeable membrane is applied to the air-permeable membrane, fibers of the air-permeable membrane in the applied portion of the hot-melt adhesive may be partially deformed by the heat of the hot-melt adhesive. However, the deformation occurs only in the vicinity of the surface of the air-permeable membrane to which the adhesive is applied, and deformation of fibers is suppressed inside the air-permeable membrane and in the vicinity of the surface opposite to the surface to which the adhesive is applied. As a result, the deformation of fibers can be suppressed in a large area of the air-permeable membrane in the thickness direction.

The same applies to the porous membrane. The deformation due to contact with the hot-melt adhesive in a molten state may occur only in the vicinity of the surface on the side to be bonded using the adhesive, and the deformation is suppressed in areas away from the adhesive. When the porous membrane is constituted of, for example, a fluororesin porous membrane having a melting point higher than the melting point of the adhesive, the influence of deformation of fibers in the porous membrane is suppressed.

The above-described bonding of the porous membrane and the air-permeable membrane may be performed, for example, using a porous membrane roll 61 wound into a roll as illustrated in Fig. 6. Here, a case where air-permeable membranes 32 and 33 are bonded to both surfaces of a porous membrane 31 via an adhesive 38 will be described as an example. The porous membrane 31 may be a fluororesin porous membrane drawn in a longitudinal direction and a width direction.

In the apparatus illustrated in Fig. 6, the porous membrane 31 sequentially fed from the porous membrane roll 61 is supplied, via a roll 74, to a silicone rubber nip roll 64. A first air-permeable membrane 32 sequentially fed from a first air-permeable membrane roll 62 is supplied, via rolls 71, 72, and 73, to a temperature-controlled roll 65. An adhesive 38 discharged from a hot-melt gun 68 is applied to a surface of the first air-permeable membrane 32 to which the porous membrane 31 is to be bonded, after the first air-permeable membrane 32 passes through the roll 73 and before the first air-permeable membrane 32 reaches the temperature-controlled roll 65. The temperature-controlled roll 65 adjusts the temperature so that the adhesive 38 applied to the first air-permeable membrane 32 can maintain the adhesive strength. The first air-permeable membrane 32 and the porous membrane 31 are bonded by being passed between the temperature-controlled roll 65 and the silicone rubber nip roll 64 with the adhesive 38 interposed between the first air-permeable membrane 32 and the porous membrane 31. Then, a sheet-like article in which the first air-permeable membrane 32 and the porous membrane 31 have been bonded is supplied, via rolls 75, 76, and 77, to a silicone rubber nip roll 67. A second air-permeable membrane 33 sequentially fed from a second air-permeable membrane roll 63 is supplied, via rolls 78, 79, and 80, to a temperature-controlled roll 66. An adhesive 38 discharged from a hot-melt gun 68 is applied to a surface of the second air-permeable membrane 33 to which the porous membrane 31 is to be bonded, after the second air-permeable membrane 33 passes through the roll 80 and before the second air-permeable membrane 33 reaches the temperature-controlled roll 66. The temperature-controlled roll 66 adjusts the temperature so that the adhesive 38 applied to the second air-permeable membrane 33 can maintain the adhesive strength. The second air-permeable membrane 33 and the porous membrane 31 are bonded by being passed between the temperature-controlled roll 66 and the silicone rubber nip roll 67 with the adhesive 38 interposed between the second air-permeable membrane 33 and the porous membrane 31. The sheet-like article in which the first air-permeable membrane 32, the porous membrane 31, and the second air-permeable membrane 33 are bonded as described above becomes a product via rolls 81, 82, 83, 84, 85, 86, and 87, and is wound onto a product roll 69.

The adhesive is preferably applied in a molten state. In order to suppress curing of the adhesive on the air-permeable membrane, it is preferable to warm the air-permeable membrane. Even in this case, heating at a temperature equal to or higher than the melting point of the air-permeable membrane is not performed, and it is preferable to warm the air-permeable membrane using the temperature-controlled rolls 65 and 66 at, for example, 35°C or more and 70°C or less, more preferably 40°C or more and 60°C or less. As a result, melting of the air-permeable membrane is suppressed, which suppresses the deformation of fibers of the air-permeable membrane. Furthermore, even when the air-permeable membrane contains a component that may elute an organic gas due to heat, the elution of the organic gas from the air-permeable membrane is also suppressed by suppressing melting of the air-permeable membrane. From the same viewpoint, the air-permeable membrane is preferably bonded to the porous membrane without being brought into a molten state even when heated by the temperature-controlled rolls 65 and 66.

Although the hot-melt adhesive is heated to a molten state at the time of application, the hot-melt adhesive is preferably not reheated after the application. By thus suppressing the heat history of the hot-melt adhesive, even when the hot-melt adhesive contains a component that may generate an organic gas due to heat, the generation of the organic gas can be suppressed.

The adhesive is preferably applied using an applicator. The applicator has a plurality of arranged discharge nozzles. A molten resin discharged from each discharge nozzle is preferably stretched by an air flow sent at a speed higher than the discharge speed in a discharge direction around each nozzle, thereby being applied with a desired fiber diameter. By lowering the melt viscosity of the molten resin, the adhesive is more easily stretched, so that the fiber diameter can be made finer. By increasing the speed of the air flow, the adhesive is more easily stretched, so that the fiber diameter can be made finer.

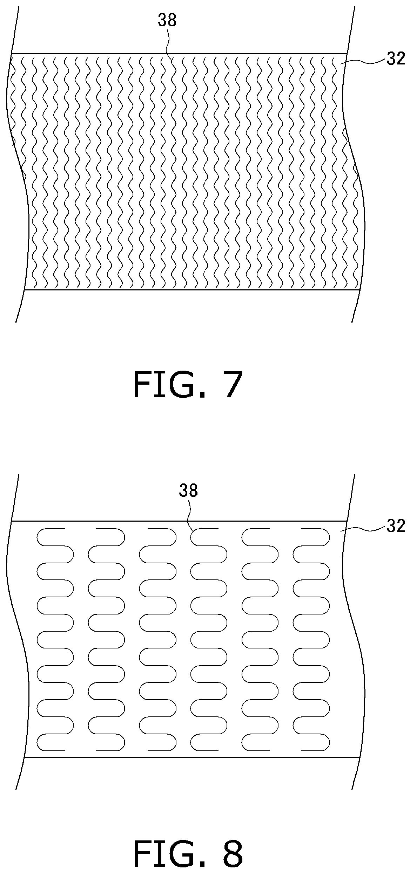

The application pattern of the adhesive is not limited. As illustrated in Figs. 7 and 8, a plurality of fibers of the adhesive are preferably arranged side by side so that the direction perpendicular to the conveyance direction of the air-permeable membrane 32 is a longitudinal direction of the fibers of the adhesive. The application pattern of the adhesive may be, as illustrated in Fig. 7, a wavy shape having peak portions and valley portions that are alternately arranged. The peak portions protrude in a direction intersecting the longitudinal direction of the fibers of the adhesive and the valley portions protrude on a side opposite to the peak side in the direction intersecting the longitudinal direction of the fibers of the adhesive. Alternatively, as illustrated in Fig. 8, the application pattern may be a wavy shape in which peak portions and valley portions are alternately provided so as to have portions extending in a direction intersecting the longitudinal direction of the fibers of the adhesive.

The air-permeable membranes 32 and 33 to which the adhesive has been applied as described above are superposed on the porous membrane 31, and pressure is applied by the nip rolls 64 and 67. At this time, by pressing the air-permeable membranes 32 and 33 and the porous membrane 31 against each other, an air filter medium 30 is obtained. Here, from the viewpoint of suppressing an increase in the rate of increase in pressure loss due to pressure at the time of stacking, the pressure applied by the nip rolls 64 and 67 to a stacked body of the porous membrane and the air-permeable membranes attached with the adhesive is preferably, for example, 0.6 MPa or less. From the viewpoint of easily ensuring a good bonded state, the pressure applied by the nip rolls 64 and 67 to the stacked body of the porous membrane and the air-permeable membranes attached with the adhesive is preferably, for example, 0.3 MPa or more. The pressure can be measured, for example, as an instantaneous pressure when passing between rolls using a pressure-measuring film (Prescale manufactured by FUJIFILM Corporation). The nip rolls 64 and 67 are preferably not heated to temperatures equal to or higher than the melting points of the air-permeable membranes 32 and 33.

For example, in a method of production in which a porous membrane obtained by drawing is transferred, without being wound into a roll shape, directly to a step of bonding an air-permeable membrane, it is necessary to store a thick air filter medium including the air-permeable membrane in a roll shape, which requires a large space. In contrast, space saving can be achieved by winding, into a roll shape for storage, a porous membrane in a state where the air-permeable membrane is not bonded as described above and by performing the bonding step to obtain a filter medium for shipment when a filter medium having an air-permeable membrane bonded thereto is needed.

When the air-permeable membrane is melted to be bonded to the porous membrane, a long time is required to heat the air-permeable membrane using a heating roller until the fibers of the air-permeable membrane become molten. Therefore, the bonding step can be performed in a shorter time by bonding the air-permeable membrane to the porous membrane by applying an adhesive. Here, when the porous membrane is obtained by performing drawing over a predetermined time during the production of the porous membrane, the time required for bonding the porous membrane and the air-permeable membrane may be shorter than the time required for drawing the porous membrane. Therefore, in a method of production in which a porous membrane obtained by drawing is transferred, without being wound into a roll shape, directly to a step of bonding an air-permeable membrane, the step of drawing the porous membrane is a rate-determining step. In contrast, in a method of production in which a large number of porous membrane rolls that can be stored in a space-saving manner are prepared in advance and a bonding step with the air-permeable membrane is performed while the porous membrane wound into a roll shape is fed, an air filter medium can be quickly obtained while space saving is achieved.

Examples

The details of the present disclosure will be specifically described below with reference to Examples and Comparative Examples.

In Example 1, an air filter medium was obtained by bonding, using an adhesive, a fluororesin porous membrane obtained as described below to an air-permeable membrane.

First, 300 g of a hydrocarbon oil ("IP Solvent 2028" manufactured by Idemitsu Kosan Co., Ltd.) serving as an extrusion liquid lubricant was added to and mixed with 1 kg of a PTFE fine powder having an average molecular weight of 6,500,000 ("POLYFLON Fine Powder F106" manufactured by Daikin Industries, Ltd.) at 20°C. Next, the obtained mixture was extruded using a paste extrusion apparatus to obtain a rod-shaped molded body. The rod-shaped molded body was formed into a sheet shape using calender rolls heated to 70°C to obtain a fluororesin sheet. The fluororesin sheet was passed through a hot-air drying oven at 250°C to evaporatively remove the hydrocarbon oil to obtain a band-shaped unfired fluororesin sheet having an average thickness of 200 μm and an average width of 150 mm.

Next, the unfired fluororesin sheet was drawn at a drawing ratio of 5 times in the longitudinal direction. The drawing temperature in the longitudinal direction was 250°C. Here, the drawing rate (%/s) in the longitudinal direction was 150 (%/s).

Next, the drawn unfired fluororesin sheet was drawn at a drawing ratio of 30 times in the width direction at a drawing temperature of 350°C using a tenter capable of continuous clipping to obtain a fluororesin porous membrane. The fluororesin porous membrane was wound into a porous membrane roll. The obtained fluororesin porous membrane had an average fiber diameter of 69 nm.

Then, an air-permeable membrane to which an adhesive had been applied was stacked on the fluororesin porous membrane being fed from the porous membrane roll on the leeward side in the passage direction of the air flow, and the air-permeable membrane was bonded to the fluororesin porous membrane through a nip roll to obtain an air filter medium of Example 1.

The air-permeable membrane used in Example 1 was a spun-bonded nonwoven fabric composed of PET (average fiber diameter: 11 μm, basis weight: 40 g/m$^2$, thickness: 230 μm).

The adhesive used in Example 1 was an olefin hot-melt resin having a melt viscosity at 180°C of 1600 mPa·s ("ASAHIMELT FR921" manufactured by Asahi Chemical Synthetic Co., Ltd.).

The adhesive was spray-applied to the air-permeable membrane at a line speed of 30 m/min using an applicator manufactured by ITW Dynatec K.K. The applicator used was an applicator provided with a plurality of nozzles having mutually parallel discharge directions for discharging the adhesive. The application was controlled so that the air flow speed was higher than the discharge speed of the adhesive, whereby fibers of the adhesive stretched relative to the air-permeable membrane were applied in a waveform. The opening size at the tip of each nozzle in the applicator was 0.43 μm$^2$, the size of the air discharge port was 0.64 μm$^2$, and the center-to-center distance between the nozzles was 1.6 mm. The pump speed for feeding the adhesive heated to 180°C to be in a molten state was set to 6.4%. Air heated to 190°C was sent at a flow rate of 3000 cm$^3$/min to stretch the fibers of the adhesive after discharging the adhesive in a molten state from the nozzles. The adhesive applied as described above had an average fiber diameter of 48.7 μm, and the applied amount of the adhesive was 3.2 g/m$^2$.

In Example 1, there were substantially no points where a plurality of fibers of the adhesive overlapped with each other. Furthermore, in Example 1, when a virtual line of 1 cm in length was drawn in a direction perpendicular to the longitudinal direction of any one of the plurality of fibers of the adhesive, the average number of fibers of the adhesive intersecting the virtual line was 2.5. In Example 1, the nip pressure applied when the air-permeable membrane was bonded to the fluororesin porous membrane through the nip roll was 0.40 Pa.

In Example 1, in order to suppress curing of the adhesive on the air-permeable membrane before bonding with the fluororesin porous membrane, the air-permeable membrane to which the adhesive was to be applied was warmed to 40°C using a temperature-controlled roll.

In Example 1, when the peel strength (N/35 mm) of the bonded porous membrane and air-permeable membrane was measured, the peel strength was 0.15 (N/35 mm). The peel strength was measured based on the test method of JIS Z 0237:2009 180-degree peel test using a precision universal testing machine manufactured by Shimadzu Corporation, with a specimen width of 35 mm and a tensile speed of 100 mm/min (the same applies hereinafter). When the rate of increase in pressure loss accompanying the bonding of the porous membrane and the air-permeable membrane was determined, the rate of increase in Example 1 was 5.7%.

Example 2 was the same as Example 1 except that a hot-melt resin having a melt viscosity at 180°C of 2050 mPa·s ("ASAHIMELT FR530" manufactured by Asahi Chemical Synthetic Co., Ltd.) was used, the average fiber diameter of the adhesive was 42.6 μm, the applied amount of the adhesive was 3.0 g/m$^2$, and the nip pressure was 0.55 Pa. In Example 2, when the peel strength (N/35 mm) of the bonded porous membrane and air-permeable membrane was measured, the peel strength was 0.15 (N/35 mm). The rate of increase in pressure loss in Example 2 was 1.5%.

Example 3 was the same as Example 2 except that the material of the air-permeable membrane was changed to a PET material in which a phosphorus-based flame retarder was copolymerized (average fiber diameter: 12 μm, basis weight: 50 g/m$^2$, thickness: 260 μm), the average fiber diameter of the adhesive was 45.8 μm, the applied amount of the adhesive was 3.1 g/m$^2$, and the nip pressure was 0.45 Pa. In Example 3, when the peel strength (N/35 mm) of the bonded porous membrane and air-permeable membrane was measured, the peel strength was 0.15 (N/35 mm). The rate of increase in pressure loss in Example 3 was 2.7%.

Example 4 was the same as Example 1 except that the hot-melt resin of the adhesive was changed to "Tohmide 1310" manufactured by Fuji Kasei Co., Ltd., having a melt viscosity at 180°C of 2500 mPa·s, the average fiber diameter of the adhesive was 54.3 μm, the applied amount of the adhesive was 3.4 g/m$^2$, and the nip pressure was 0.45 Pa. In Example 4, when the peel strength (N/35 mm) of the bonded porous membrane and air-permeable membrane was measured, the peel strength was 0.17 (N/35 mm). The rate of increase in pressure loss in Example 4 was 7.7%.

Example 5 was the same as Example 1 except that a hot-melt resin having a melt viscosity at 180°C of 4000 mPa·s ("TECHNOMELT MP801" manufactured by Henkel) was used, the average fiber diameter of the adhesive was 71.6 μm, the applied amount of the adhesive was 4.2 g/m$^2$, and the nip pressure was 0.55 Pa. In Example 5, when the peel strength (N/35 mm) of the bonded porous membrane and air-permeable membrane was measured, the peel strength was 0.2 (N/35 mm). The rate of increase in pressure loss in Example 5 was 15.8%.

Example 6 was the same as Example 1 except that a hot-melt resin having a melt viscosity at 180°C of 4100 mPa·s ("ASAHIMELT FR561" manufactured by Asahi Chemical Synthetic Co., Ltd.) was used, the average fiber diameter of the adhesive was 98.3 um, the applied amount of the adhesive was 4.8 g/m$^2$, and the nip pressure was 0.50 Pa. In Example 6, when the peel strength (N/35 mm) of the bonded porous membrane and air-permeable membrane was measured, the peel strength was 0.25 (N/35 mm). The rate of increase in pressure loss in Example 6 was 17.2%.

According to Examples above, it was confirmed that when the average fiber diameter of the adhesive was increased, there was a tendency that the rate of increase in pressure loss due to the fibers of the adhesive covering the porous membrane becomes remarkably large. In particular, comparing Example 2 and Example 5 in which the nip pressure was the same, it can be understood that the rate of increase in pressure loss becomes remarkably large as the average fiber diameter of the adhesive increases.

In Example 7, a filter medium was obtained in the same manner as in Example 1 except that a synthetic rubber-based hot-melt resin having a melt viscosity at 180°C of 2300 mPa·s ("939S" manufactured by Sanyo Life Material Co., Ltd.) was used, the average fiber diameter of the adhesive was 102.2 μm, the applied amount of the adhesive was 4.7 g/m$^2$, and the nip pressure was 0.55 Pa. In the filter medium of Example 7, the rate of increase in pressure loss was 43.1%.

Example 8 was the same as Example 1 except that a hot-melt resin having a melt viscosity at 180°C of 1600 mPa·s ("ASAHIMELT FR921" manufactured by Asahi Chemical Synthetic Co., Ltd.) was used, the average fiber diameter of the adhesive was 45.3 μm, the applied amount of the adhesive was 3.1 g/m$^2$, and the nip pressure was 0.75 Pa. In the filter medium of Example 8, the rate of increase in pressure loss was 23.1%.

Example 9 was the same as Example 1 except that a hot-melt resin having a melt viscosity at 180°C of 2050 mPa·s ("ASAHIMELT FR530" manufactured by Asahi Chemical Synthetic Co., Ltd.) was used, the average fiber diameter of the adhesive was 43.7 μm, the applied amount of the adhesive was 3.0 g/m$^2$, and the nip pressure was 0.90 Pa. In the filter medium of Example 9, the rate of increase in pressure loss was 50.8%.

In Example 10, an air filter medium was obtained in the same manner as in Example 1 except that a PP-based hot-melt resin was used as the adhesive, the adhesive was spray-applied using an applicator provided with a plurality of nozzles whose discharge directions were oriented in random directions, the average fiber diameter of the adhesive was 116 μm, the applied amount of the adhesive was 5 g/m$^2$, and a PET material in which a phosphorus-based flame retarder was copolymerized (average fiber diameter: 12 μm, basis weight: 50 g/m$^2$, thickness: 260 μm) was used as a support layer. In Example 10, when the peel strength (N/35 mm) of the bonded porous membrane and air-permeable membrane was measured, the porous membrane broke without being able to peel the porous membrane from the air-permeable membrane. In Example 10, since the fibers of the adhesive were applied randomly, many overlaps of fibers of the adhesive occurred. Specifically, in Example 10, the overlapping points between fibers of the adhesive per one fiber of the adhesive were confirmed to be five on average. In Example 10, although the bonding was so strong that the breakage of the membrane occurred in the confirmation of peel strength, the rate of increase in pressure loss was 39.2%.

According to Examples 1 to 10 above, when the fluororesin porous membrane and the nonwoven fabric are bonded, direct heating of the fluororesin porous membrane and the nonwoven fabric with rolls can be avoided. Therefore, when the fluororesin porous membrane or the nonwoven fabric has a certain function, the deterioration of the function due to heat is suppressed.

The above rates of increase in pressure loss due to bonding were determined as follows by measuring the pressure loss of a stacked article in a state where the porous membrane and the air-permeable membrane are merely stacked and not bonded to each other and the pressure loss of an air filter medium after the porous membrane and the air-permeable membrane are bonded using an adhesive.

(Pressure loss of stacked article before bonding)

A measurement sample in which the air-permeable membrane was merely stacked on the porous membrane without bonding was set in a filter holder having a diameter of 100 mm. The pressure on the inlet side was increased using a compressor, and the flow rate of air passing through the measurement sample was adjusted to 5.3 cm/s using a velocimeter. The pressure loss at this time was measured using a manometer.

(Pressure loss of air filter medium after bonding)

A measurement sample of an air filter medium in which the porous membrane and the air-permeable membrane were bonded using an adhesive was set in a filter holder having a diameter of 100 mm. The pressure on the inlet side was increased using a compressor, and the flow rate of air passing through the measurement sample was adjusted to 5.3 cm/s using a velocimeter. The pressure loss at this time was measured using a manometer.

(Rate of increase in pressure loss)

From the pressure loss of the stacked article and the pressure loss of the air filter medium measured as described above, the rate of increase in pressure loss was calculated according to the following formula.

Rate of increase in pressure loss (%) = (pressure loss of air filter medium/pressure loss of stacked article) $\times$ 100 - 100

In Comparative Example 1, an air filter medium was obtained by thermally laminating the same fluororesin porous membrane as in Example 1 and a core-sheath nonwoven fabric having a core formed of PE and a sheath formed of PET (spun-bonded nonwoven fabric manufactured by PT MULTI SPUNINDO JAYA).
In Comparative Example 2, an air filter medium was obtained by thermally laminating the same fluororesin porous membrane as in Example 1 and a core-sheath nonwoven fabric having a core formed of PE and a sheath formed of PET ("ELEVES" manufactured by UNITIKA Ltd.).
In each of the air filter media of Comparative Examples 1 and 2, thermal lamination was performed by pressing a roll heated to 200°C as a temperature exceeding the melting point of the resin constituting the sheath of the nonwoven fabric against each of the surface of the fluororesin porous membrane opposite to the bonding surface with the nonwoven fabric and the surface of the nonwoven fabric opposite to the bonding surface with the fluororesin porous membrane. In Comparative Examples 1 and 2, since the portions opposite to the bonding surfaces are heated the most, the degree of shape change of the surface of the nonwoven fabric opposite to the bonding surface increases. Furthermore, in the air filter media of Comparative Examples 1 and 2, the nonwoven fabric and the fluororesin porous membrane are exposed to high temperatures. Therefore, even if the nonwoven fabric or the fluororesin porous membrane has a certain function, the function deteriorates due to heat.
For each of the air filter media of Examples 1 to 9 and Comparative Examples 1 and 2, the outgassing amount was measured by the dynamic headspace method as follows. In the measurement of the outgassing amount, a test piece of 120 mm $\times$ 40 mm was placed in a constant-temperature chamber at 40°C for 60 minutes so as to desorb organic substances from the test piece. A 99.9999% high-purity helium gas was passed through the constant-temperature chamber, and the gas after passing through the chamber was sent to an adsorption tube to collect the organic substances generated. The collected organic substances were analyzed by gas chromatography-mass spectrometry (GC-MS). The outgassing amounts were as follows: 52 $\mu$g/m$^2$ in Example 1, 112 $\mu$g/m$^2$ in Example 2, 454 $\mu$g/m$^2$ in Example 3, 150 $\mu$g/m$^2$ in Example 4, 114 $\mu$g/m$^2$ in Example 5, 68 $\mu$g/m$^2$ in Example 6, 850 $\mu$g/m$^2$ in Example 7, 60 $\mu$g/m$^2$ in Example 8, 105 $\mu$g/m$^2$ in Example 9, 550 $\mu$g/m$^2$ in Comparative Example 1, and 814 $\mu$g/m$^2$ in Comparative Example 2. In Example 7 in which a synthetic rubber-based hot-melt resin was used as the adhesive, it was confirmed that the outgassing amount particularly increased.
For each of the filter media of Examples 1 to 6 and Comparative Examples 1 and 2, a combustibility test according to the UL 94-HF test method was conducted. The results were as follows: Example 1, HF-1 equivalent; Example 2, HF-1 equivalent; Example 3, HF-1 equivalent; Example 4, HF-1 equivalent; Example 5, HF-1 equivalent; Example 6, HF-1 equivalent; Comparative Example 1, HBF equivalent; and Comparative Example 2, HBF equivalent.
In Example 11, an air filter medium was obtained in the same manner as in Example 2 except that the air-permeable membrane used was obtained by coating, with an antifungal agent, a core-sheath nonwoven fabric having a core formed of PE and a sheath formed of PET (spun-bonded nonwoven fabric manufactured by PT MULTI SPUNINDO JAYA). The antifungal agent used was an organic synthetic antifungal agent (pyridine-based).
In Comparative Example 3, an air filter medium was obtained in the same manner as in Example 11 except that the fluororesin porous membrane and the air-permeable membrane that are the same as those in Example 11 were bonded by thermal lamination instead of being bonded using an adhesive. The thermal lamination of Comparative Example 3 was performed, as in Comparative Examples 1 and 2 above, by pressing a roll heated to 200°C as a temperature exceeding the melting point of the resin constituting the sheath of the nonwoven fabric against each of the surface of the fluororesin porous membrane opposite to the bonding surface with the nonwoven fabric and the surface of the nonwoven fabric opposite to the bonding surface with the fluororesin porous membrane.
For Example 11 and Comparative Example 3, a simple antifungal test was conducted as a test conforming to the test for fungus resistance (JIS Z 2911). The simple antifungal test was conducted as follows. A sample was cut into a size of 20 mm × 20 mm. Cladosporium was used as a fungal species, and the sample was placed on a potato-dextrose agar medium. A suspension having a spore-suspension concentration of about 1000 RLU (ATP of the suspension was measured using "Lumitester Smart" manufactured by Kikkoman Biochemifa Company, which was used as a rough estimate of the concentration of the suspension) was dispensed. The inoculation volume of the turbid suspension was set to 0.1 mL. The sample was left at room temperature for 8 days, and the growth of mold on the sample surface was visually observed.

In the simple antifungal test of Example 11, the growth of mold at the inoculated portions was not visually confirmed. In the simple antifungal test of Comparative Example 3, the growth of mold at the inoculated portions was clearly recognized visually. When the same antifungal test was conducted using, as a sample, only an air-permeable membrane coated with an antifungal agent (with no fluororesin porous membrane bonded), the growth of mold at the inoculated portions was not visually confirmed in this case as well.

In Example 12, an air filter medium was obtained in the same manner as in Example 2 except that the air-permeable membrane used was a melt-blown nonwoven fabric formed of polypropylene (PP) ("MPPW025" manufactured by HEIGEN).

In Comparative Example 4, an air filter medium was obtained in the same manner as in Example 12 except that the fluororesin porous membrane and the air-permeable membrane that are the same as those in Example 12 were bonded by thermal lamination instead of being bonded using an adhesive. The thermal lamination of Comparative Example 4 was performed by pressing a roll heated to 150°C as a temperature exceeding the melting point of the resin constituting the sheath of the nonwoven fabric against only one surface of the nonwoven fabric opposite to the bonding surface with the fluororesin porous membrane.

For Example 12 in which the air-permeable membrane was warmed to 40°C by the temperature-controlled roll and Comparative Example 4 in which the air-permeable membrane was heated to 150°C by thermal lamination, the change in size was measured between a sample having a predetermined area before bonding the fluororesin porous membrane and the air-permeable membrane and a sample after the bonding. No change was observed in Example 12 whereas the area shrank to about 95% in Comparative Example 4. In Comparative Example 4, wrinkles were generated in the obtained air filter medium.

Although embodiments of the present disclosure have been described above, it will be understood that various changes in form and details can be made without departing from the gist and scope of the present disclosure as set forth in the claims.

Reference Signs List

1 air filter unit
20 filter pack, pleated filter medium
25 frame body
30 air filter medium
31 porous membrane
32 first air-permeable membrane (air-permeable membrane)
33 second air-permeable membrane (air-permeable membrane)
38 hot-melt adhesive

Citation List

Patent Literature

PTL 1: Japanese Unexamined Patent Application Publication No. 2009-297702

**Claims**

1. A method for producing an air filter medium (30), comprising:

   a first step of preparing a porous membrane (31) and an air-permeable membrane (32, 33); and
   a second step of bonding the porous membrane and the air-permeable membrane using a hot-melt adhesive (38) in a molten state,
   wherein, in the second step, a temperature of the air-permeable membrane is lower than a temperature of the hot-melt adhesive in the molten state.

2. The method for producing an air filter medium according to claim 1,
wherein either the porous membrane or the air-permeable membrane is either a melt-blown nonwoven fabric, a spun-bonded nonwoven fabric, or a membrane containing one or two or more selected from the group consisting of an antibody, an antibacterial agent, and an antifungal agent.

3. The method for producing an air filter medium according to claim 1 or 2,
wherein the porous membrane is a polytetrafluoroethylene porous membrane.

4. The method for producing an air filter medium according to any one of claims 1 to 3,
wherein the air-permeable membrane contains one or two or more selected from the group consisting of polyethylene terephthalate, polyethylene, polyphenylene sulfide, polypropylene, and polyamide.

5. The method for producing an air filter medium according to any one of claims 1 to 4,
wherein the porous membrane and the air-permeable membrane are bonded using the hot-melt adhesive, the hot-melt adhesive being in a fibrous form.

6. The method for producing an air filter medium according to claim 5,
wherein, in the second step, the hot-melt adhesive in the molten state is discharged from a nozzle, and is fiberized by being stretched using an air flow having a speed higher than a discharge speed of the hot-melt adhesive from the nozzle.

7. The method for producing an air filter medium according to claim 5 or 6,
wherein a plurality of fibers of the hot-melt adhesive are arranged so as to share a common longitudinal direction.

8. The method for producing an air filter medium according to any one of claims 1 to 7,
wherein the hot-melt adhesive has a melt viscosity at 180°C of 1000 mPa·s or more and 2500 mPa·s or less.

9. The method for producing an air filter medium according to any one of claims 1 to 8,
wherein the hot-melt adhesive is one or two or more selected from the group consisting of a polyolefin resin and a polyamide resin.

10. The method for producing an air filter medium according to any one of claims 1 to 9,
wherein an average fiber diameter of the porous membrane, an average fiber diameter of the adhesive, and an average fiber diameter of the air-permeable membrane are represented by "average fiber diameter of porous membrane":"average fiber diameter of adhesive":"average fiber diameter of air-permeable membrane" = 1/2000 to 1/30:1 to 6:1.

11. The method for producing an air filter medium according to any one of claims 1 to 10,

wherein, after the second step, a sheet including the porous membrane, the hot-melt adhesive, and the air-permeable membrane is passed between a pair of rolls, and
a pressure of 0.3 Pa or more and 0.6 Pa or less is applied to the sheet when the sheet passes between the pair of rolls.

12. An air filter medium produced by the method according to any one of claims 1 to 11.

13. A filter pack (20) comprising the air filter medium according to claim 12, wherein the air filter medium is folded so as to have mountain-folded portions and valley-folded portions.

14. An air filter unit (1) comprising:

an air filter medium produced by the method according to any one of claims 1 to 11, or a pleated filter medium (20) that is an air filter medium produced by the method according to any one of claims 1 to 11 and is folded so as to have mountain-folded portions and valley-folded portions; and
a frame body (25) for holding the air filter medium or the pleated filter medium.

15. An air filter medium (30) comprising:

a porous membrane (31);
an air-permeable membrane (32, 33); and
a hot-melt adhesive (38) for bonding the porous membrane and the air-permeable membrane,
wherein a degree of deformation of fibers due to heat in a portion of the air-permeable membrane on a side opposite to the porous membrane is lower than a degree of deformation of fibers due to heat in a portion of the air-permeable membrane on a side of the porous membrane.

FIG. 1

FIG. 2

FIG. 3

FIG. 4

FIG. 5

FIG. 6

FIG. 7

FIG. 8

## INTERNATIONAL SEARCH REPORT

| International application No. |
|---|
| **PCT/JP2024/030138** |

### A. CLASSIFICATION OF SUBJECT MATTER

***B01D 39/16***(2006.01)i; ***B01D 46/52***(2006.01)i; ***B05D 3/02***(2006.01)i; ***B05D 7/00***(2006.01)i; ***B05D 7/24***(2006.01)i
FI: B01D39/16 A; B01D39/16 C; B01D39/16 E; B01D46/52 A; B05D3/02 B; B05D7/00 B; B05D7/24 301P

According to International Patent Classification (IPC) or to both national classification and IPC

### B. FIELDS SEARCHED

Minimum documentation searched (classification system followed by classification symbols)

B01D39/16; B01D46/52; B05D3/02; B05D7/00; B05D7/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-176262 A (DAIKIN INDUSTRIES, LTD.) 27 June 2000 (2000-06-27)<br>claims 1-2, paragraphs [0011], [0020], [0022], [0025], example 1 | 1-15 |
| A | JP 2005-334758 A (NITTO DENKO CORPORATION) 08 December 2005 (2005-12-08)<br>entire text, all drawings | 1-15 |
| A | JP 2017-23979 A (NITTO DENKO CORPORATION) 02 February 2017 (2017-02-02)<br>entire text, all drawings | 1-15 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 September 2024** | **08 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/030138**

| Patent document cited in search report | | | Publication date (day/month/year) | Patent family member(s) | | | Publication date (day/month/year) |
|---|---|---|---|---|---|---|---|
| JP | 2000-176262 | A | 27 June 2000 | EP claims 1-2, paragraphs [0017], [0030], [0036], [0042], [0043], example 1 CA | 1142702 2355246 | A1 A1 | |
| JP | 2005-334758 | A | 08 December 2005 | (Family: none) | | | |
| JP | 2017-23979 | A | 02 February 2017 | US entire text, all drawings TW CN | 2018/0193787 201718072 107847838 | A1 A A | |

Form PCT/ISA/210 (patent family annex) (July 2022)

**REFERENCES CITED IN THE DESCRIPTION**

**Patent documents cited in the description**

- JP 2009297702 A

- WO 2020067182 A